Europäisches Patentamt

European Patent Office

Office européen des brevets

(19)

(11) EP 1 060 789 A2

(12) EUROPEAN PATENT APPLICATION

(43) Date of publication:
20.12.2000 Bulletin 2000/51

(51) Int Cl.⁷: B01J 8/12, B01J 8/00

(21) Application number: 00500126.8

(22) Date of filing: 14.06.2000

(84) Designated Contracting States:
AT BE CH CY DE DK ES FI FR GB GR IE IT LI LU
MC NL PT SE
Designated Extension States:
AL LT LV MK RO SI

(30) Priority: 15.06.1999 ES 9901327

(71) Applicant: Fundacion Inasmet
20009 San Sebastian (Guipuzcoa) (ES)

(72) Inventors:
• Vadshenko, Sergey
20009 San Sebastian (ES)

• Merzhanov, Alexander
20009 San Sebastian (ES)
• Borovinskaya, Inna
20009 San Sebastian (ES)
• Ibarreta Lopez, Federico
20009 San Sebastian (ES)
• Caro Calzada, Ignacio
20009 San Sebastian (ES)
• Gutierrez Stampa, Manuel
20009 San Sebastian (ES)

(74) Representative: Carpintero Lopez, Francisco
HERRERO & ASOCIADOS, S.L.
Alcalá, 35
28014 Madrid (ES)

(54) **Continuous procedure for manufacture of powdered materials by combustion and reactor for the realisation thereof**

(57)     The procedure is based on the technique of solid combustion or " solid flame" , known as " self-propagating high-temperature synthesis" , developing the idea of continuous manufacture of powdered materials starting from solid raw materials in powder form. Said procedure is based on synchronising the feed or loading of raw materials or reagents into the tube (1) which constitutes the reactor itself, with the output of the material itself obtained, carrying out the extraction in the lower part or section (6), all this carried out in continuous fashion, in other words, as the material is introduced into the tube (1) the synthesis takes place and the product or resulting material is extracted from the reaction without the need to stop the reactor.

FIG.1

EP 1 060 789 A2

**Description**

**OBJECT OF THE INVENTION**

The invention relates to a continuous procedure for the manufacture of powdered materials based on the technique of solid combustion known as " self-propagating high-temperature synthesis" . In other words, the procedure is foreseen to obtain powdered materials continuously, starting from solid raw materials in powdered form.

The invention also relates to a reactor for the realisation of the procedure, based on a synchronisation between the feed or loading of raw materials into the reactor and the extraction of the product obtained. All this is carried out continuously. There is also synchronisation in the supply of reaction gases and in the rate of supply, so that as the material is introduced into the reactor there is synthesis and, at the same time, the product is extracted from the reaction without the need to stop the reactor.

**BACKGROUND OF THE INVENTION**

The technique of solid combustion, also known as self-propagating high-temperature synthesis, hereinafter denominated with the abbreviation " SPHS" , is based on the phenomenon known as " solid flame" . This has been used in the preparation of hundreds of different materials, types of which include: carbides, borides, nitrides, calcogenides, inter-metallic substances (aluminides, nickelides, silicides, etc), oxide complexes, composites of these materials and even organic products and polymers.

Propagation of SPHS reactions is produced in the planar form, in other words, the reaction is carried out on the surface of the sample where energy is initially supplied and it then propagates on planes parallel to said surface, until it reaches the opposite end of the sample. This is the specific phenomenon that is given the name " solid flame".

However, there are reactions that do not reach this planar regime, producing regular or irregular type propagation.

Notwithstanding, there is a method of synthesis that lies within the SPHS technology denoted " thermal explosion" that consists of heating the whole sample until a certain temperature is reached at which said sample reacts simultaneously.

SPHS technology presents the advantages, among others, of a saving in energy due to the minimal energy supply required to initiate the reactions, the intrinsic rapidity of the process, its simplicity and the process of self-purification that occurs with some of these reactions.

In general terms the products obtained by SPHS technology can be divided into powdered materials or compacted materials, such that in order to obtain powdered materials it is possible to start from a mixture of powders or from a pre-compacted mixture, but in general, and due to the high temperatures that are reacted during the reactions, the product obtained requires a certain degree of grinding to achieve a powdered material. This degree of grinding is determined by the material itself and the required final particle size. This powdered material in turn can be the final product or need other treatments, such as a hydro-metallurgical treatment or washing.

On the other hand, one of the most interesting types of SPHS reaction is the type of reaction that implies the participation of a gaseous element. Examples of solid and gas reactions to produce a solid include the following:

$$3Si + 2 N_2 \rightarrow Si_3N_4$$

$$0.5ZnO + 0.5MnO_2 + xFe_2O_3 + yFe + zO_2 \rightarrow Mn_{0.5}Zn_{0.5}Fe_2O_4$$

In these examples the gases implicated are nitrogen and oxygen respectively.

This type of reaction, despite the interest shown in them, presents the difficulty that they need a gas to be applied to the interior of the sample. When the sample reaches high temperatures it may become molten, and in some cases the sample has been submitted to a preliminary compacting processes, both of which make it harder to introduce gas to the interior of the sample.

To resolve the problem of the entrance introduction of gasses into the samples, traditional SPHS technology has two approaches. One approach involves the use of very high pressures (400 bar) the other the introduction of the gaseous element by means of a compound thereof, which decomposes during the course of the reaction. An example of this latter type of solution is the following reaction:

$$3B + N_3Na \rightarrow 3BN + Na$$

However, these strategies for introducing gases into the SPHS reactions imply, on the one hand the technical complication of using very high temperatures and, on the other hand, use of more expensive materials.

Another of the general difficulties that SPHS technology comes up against is that the reactions are only slightly exothermic, making an external energy source necessary, not just for initiating the reaction but to keep it going as well. An example of these reactions is that which takes place in the formation of silicon carbide:

$$Si + C \rightarrow SiC$$

This synthesis requires energy to be supplied, either through the supply of heat or through the use of stimulation with an electric current. Said techniques are generally complicated and lead to a waste of part of the energy applied to the system.

**DESCRIPTION OF THE INVENTION**

The procedure put forward here is based on the so-called solid combustion technique or " solid flame" known as " self-propagating high-temperature synthesis" , in which the feed of reagents or raw materials is carried out in a controlled fashion and in synchronisation with the supply of gases that are required for the reaction to take place, and also in synchronisation with synthesis reaction rate and the state itself of the product obtained, all this carried out in a continuous fashion achieving a planer reaction propagation regime and a stationary and indefinite reaction state.

In said procedure a control of the reaction process temperature and a control of the flow of gases supplied is established, during the reaction process itself, before the reaction process or after it, all of which avoids the production of movement of the products participating in the reaction.

The reactor for realising the preferred continuous solid combustion procedure has the special feature that it is constituted and conceived such that it can support and maintain a reaction with planar propagation indefinitely while the raw materials are being supplied and the products are withdrawn from the reaction.

More specifically, the continuous reactor of the invention comprises means for supporting the reaction, supplied in a suitable tube of material, also including a raw-material feed system for the reagents; an extraction system and a system for withdrawal of material obtained; a gas feed system and, optionally, a reactor lagging or heating system.

The reactor tube should be constituted in such a way that it is able to support a reaction known as self-propagating high-temperature synthesis, but which can also be perforated to give the necessary holes for the introduction of gases, as well as diagnostic elements, such as thermocouples, level meters, etc., for a suitable monitoring and development of the reaction.

Regarding the reagent feed system that forms part of the reactor, this is foreseen to introduce the mixture of reagents into the aforementioned tube, in a regular form and in a uniform time on the free surface of the tube.

In addition to this reagent feed system there should also be a distribution of reagents to enable the synthesis to develop.

With respect to the product extraction system, responsible for extracting the product obtained from the reactor tube, at the same time as the previous system can be used to control the level reached by the reagents or the reaction, it can be complemented with a means for introducing gases to the zone where the product extraction occurs.

The reactor, and more specifically the tube that it consists of, can be placed horizontally, inclined, or vertically as has been mentioned earlier, and can even be equipped with a means to make it rotate.

The reactor is further complemented with a control system that allows, on the one hand, the flows of the gases introduced to be controlled, and the positions of these introductions, and on the other the temperature of the internal walls of the reactor, regardless of whether heating or cooling, or a combination of the two is required. The level of filling of the tube can also be controlled so that, by means of a signal, the conditioning both of the feed system and the extraction from the reactor can be effected.

The tube of the reactor can optionally incorporate an auxiliary ignition system to initiate the reaction, which may be fixed, mobile or removable.

The advantages obtained through use of the continuous process and cited reactor can be summarised as follows:

- The planar propagation regime of the reaction is assured, leading to conditions nearer to the theoretical thermodynamical ones, in turn leading to a greater homogeneity of the product obtained.

- The penetration of the gases into the heart of the reaction is improved, as in this type of reaction the reaction front is always accessible.

- Pre-heating and post-heating of the materials is facilitated in the case of only slightly exothermic reactions or reactions that do not go to completion during the process.

- The automation of the process is practically direct, such that once the parameters are known and the rate of feed and withdrawal of the material, gas flow, reaction temperature, complete automation is very easy.

## DESCRIPTION OF THE DRAWINGS

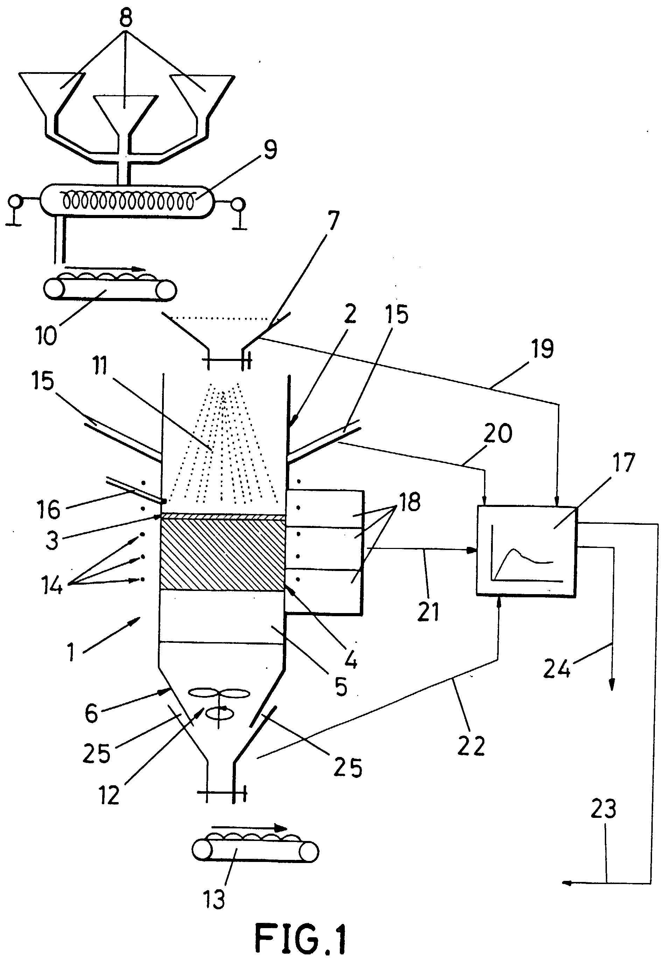

To complement the description being given and with the object of facilitating a better understanding of the characteristics of the invention, in accordance with an example of a practical embodiment thereof, a single sheet of drawings accompanies said description on which, for illustrative purposes and which is non-limiting there is a single figure representing a general schematic view of the continuous reactor object of the invention.

## PREFERRED EMBODIMENT OF THE INVENTION

As can be seen in the figure referred to, the reactor used to carry out the procedure of the invention is constituted of a tube (1) of a suitable material in which, from top to bottom, the sections or zones referred to by the numbers (2), (3), (4), (5) and (6) can be found, with the peculiarity that, above zone (2) and in front of the tube itself (1) a kind of chute (7) has been foreseen in which the mixture and feed of the material from a supply installation takes place, in which channels (8) of different materials or reagents can be distinguished, a tube with a conveyor belt (9) where mixing take place and a transporter (10) that unloads into the aforementioned feed chute (7), such that the feed system equipped with this chute (7) has the characteristics suitable for introducing the raw materials regularly into the reactor itself, in other words, with a uniform distribution, as is represented by the reference (11), to allow the development of the reaction, which is produced according to zone (3) in a planar or quasi planar regime, such that, after this reaction zone (3) we have zone or section (4) considered as post-reaction, after which the zone or section (5) is established as a cooling zone, and then the lower output part or section (6), in which an extractor device is deployed (12) that extracts the product or material obtained and unloads it onto the transport mechanism (13).

The tube (1) should combine a series of characteristics defined by the synthesis to be carried out and it should be made of a material that withstands the temperatures implicated by the reaction without melting, nor should it suffer any type of chemical attack by the reagents or products, nor should these stick to the internal surface of the aforementioned tube (1).

As a complement, said tube (1) may be subject to a series of perforations (14) for coupling a lagging system, or a heating or cooling system, with the peculiarity that corresponding to zone (2) where the homogeneous distribution of the material takes place, the conducts (15) have been foreseen for the application of gases, as well as a conduct (16) through which the instantaneous heating of this homogeneously distributed material can take place by specific ignition.

The reactor is complemented with a control system (17) connected to the feed chute (7), with the conducts for application of gases (15), with temperature sensors referenced by (18) and equally in connection with the output or product extraction system, connections that correspond, respectively, to references (19), (20), (21) and (22), on the base of which the control system itself (17) can obtain control signals both of raw materials and of gas pressure, the temperature, and provide reports of the reaction gases, the consumptions and the product, such that the aforementioned control signals are extracted through the connection or through (23) and the alluded reports via (24).

In accordance with that stated above, the feed system established in the chute (7) should be able to control the quantity of material that is introduced into the tube or reactor, such that this quantity is regular during the course of time, and it should also be capable of distributing said material such that surface on which the reaction propagates is planer or nearly planer.

For its part, the extraction system established in the lower section (6) should be adopted fundamentally to the type of substance that is to be produced, with respect to the hardness and compactness thereof, as well as its output temperature and its chemical character. This stretch may include some conducts (25) at the extraction point, through which gases may be applied, according to the needs of the reaction to be carried out.

Obviously, both the gas entrance conducts (15) and the conducts (25) mentioned above, should be adequately controlled through the system (17) for channelling and controlling the flow of gas introduced into the reactor, allowing the entrance of the gases required in any state of reaction, either before the reaction, while it is in progress, or after it has finished. Said gases should also be introduced uniformly and their introduction should not lead to movements of the products introduced in the reactor.

As for the temperature control system, this should be adapted to the needs of heating or cooling, according to the reaction to be carried out, while the ignition system that is established through the conduct (16), in the upper section (2) of the tube (1), is foreseen for its application to those cases in which the conditions in which the reaction is carried out. The reaction does not start spontaneously.

Finally, it should be said that the control system (17) will control both the feed system and the material extraction system to maintain a constant level at the reaction front, such that if a level control system were not incorporated, the reactor can work in stationary fashion, balancing the feed velocity of the reagents with the material or resulting product extraction rate.

An example of manufacture of a material based on the procedure and reactor of the invention, is as follows:

Manufacture of a barium ferrite

This example describes the production of a barium ferrite, having the following stoichiometry: $BaFe_{12}O_{19}$ using 5 % iron as combustible material (percentage included within the conditions in which the SPHS reaction occurs). The reaction that takes place is as follows:

$$BaCO_3 + (12\text{-}2x)\ Fe_2O_3 + x\ Fe + O_2 \rightarrow BaFe_{12}O_{19} + CO_2$$

Therefore, to prepare 45 grams of mixture of starting materials the following quantities should be weighed out:

- 20 grams of $Fe_2O_3$.
- 4.5 grams of $BaCO_3$.
- 1.3 grams of Fe.

The purity of the reagents used is suitable for the production of barium ferrite. The particle size required is approximately 50 $\mu$m.

These reagents weighed in the appropriate quantities are mixed until a homogeneous mixture is achieved and then they are added to the feed system.

The reactor has previously been heated to a temperature that allows auto-ignition of the mixture. On the other hand, the gas feed system has been set at 60 l/h of oxygen, introducing this both to the reaction surface and to the post-reaction zone.

Once the above conditions have been set the reaction is set in motion connected the feed system and at the same time synchronising the product extraction system to thus maintain a constant fill level in the reactor and therefore in the reaction. This can also be carried out by using a control of the feed systems and extraction based on the average level in the reactor monitored by an additional system.

The reaction is maintained in this way in a stationary and indefinite state. Once the reagent mixture has been used up the propagation of the reaction finishes and the reactor is emptied by continuing the extraction process.

**Claims**

1. A continuous procedure for manufacture of powder materials, which based on the solid combustion technique or " solid flame" known as " self-propagating high-temperature synthesis" , in which the raw materials or reagents are supplied by a feed system (11), a reaction with supply of gas and supply of energy, finishing with the extraction of the product, characterised in that it consist of:

   - Carrying out a control of the feed of raw materials or reagents (11) for their regulation in time to achieve a planar reaction propagation regime.

   - Controlling the gas flow so that they are introduced, either during, prior to or after the reaction itself, to achieve a uniformity of said gas supply that avoids the production of movement of the products that take part in the reaction.

   - Control of the temperature during the reaction process.

   - Synchronised extraction of the resulting product with the feed of raw materials or reagents (11), to maintain the reaction indefinitely.

2. A reactor for the manufacture of powdered materials, in accordance with the procedure of the previous claim, characterised in that it comprises:

- Media materialised in a tube (1) able to support a reaction based on the self-propagating high-temperature synthesis itself.

- A reagent feed system by which the reagents are introduced into the tube (1) in a regular fashion in time and uniformly over the free surface of said tube (1).

- A reagent distribution system (11), to allow a suitable development of the reaction synthesis.

- An extractor system (12) for the product obtained.

3. A reactor for the manufacture of materials in powdered form, according to claim 2, characterised in that the tube (1) for supporting the reaction, comprises of a series of zones or sections (2), (3), (4), (5) and (6), in which the homogeneous and perfectly distributed introduction of the reagents (11) takes place, as well as the corresponding reaction, the cooling and the output of the material, also including a chute (7) by which the feed of the reagent mixture is realised, to which the opportune means are associated for a regulation in time and a uniform introduction of said reagents to the free surface of the tube (1), with the aim of obtaining in zone (3) a planar regime of the reaction propagation.

4. A reactor for the manufacture of powdered materials, according to claims 2 and 3, characterised in that the lower zone and the output (6) of the tube (1) have means of extraction (12) of material or product obtained, associated with a control system (17), all this complemented with conducts of means for introducing gases (15) in the distribution zone (2) of the reagents and introduction of gases (25) in the extraction zone (6).

5. Reactor for the manufacture of powdered materials, according to claims 2 to 4, characterised in that the control system (17) is associated with the feed chute (7), with the gas entrance conducts (15) and (25) and with an intermediate zone equipped with temperature sensors (18), in order to control both the introduction of the mixture of reagents and the temperature inside the tube (1) and the output of the material itself, including the control of the application of gases via the conducts (15) and (25), in order to continuously maintain the entrance of the mixture of reagents and the output of the material obtained.

6. Reactor for the manufacture of powdered materials, according to claims 2 to 5, characterised in that the tube (1) is susceptible to having lateral orifices (14) for the application of a lagging system.

7. Reactor for the manufacture of powdered materials, according to claims 2 to 6, characterised in that the tube (1) can be placed vertically, horizontally or at an inclined angle, and even be associated with means that allow it to rotate.

8. Reactor for the manufacture of powdered materials, according to claims 2 to 7, characterised in that the control system (17) associated through the channels (19), (20), (21) and (22) with the gas feed systems, temperature sensors and material extraction, comprises output channels (23) and (24) for the control signals.

9. Reactor for the manufacture of powdered materials, according to claims 2 to 8, characterised in that it can optionally have an ignition system incorporated through a channel (16) to initiate the reaction.

FIG.1